# EUROPEAN PATENT APPLICATION

(11) **EP 3 308 663 A1**
(43) Date of publication of application: **18.04.2018**
(21) Application number: 17020029.9
(22) Date of filing: 26.01.2017
(51) Int. Cl.: A43B 1/00, A43B 13/04, B29D 35/10, B29D 35/12, B29D 35/14

(54) **ENVIRONMENT-FRIENDLY, CUSHIONING AND WELL-WRAPPING POPCORN BRIDGING SHOES AND PRODUCTION PROCESS THEREOF**

(30) Priority: 13.10.2016 CN 201610892312
(71) Applicant: Chen, Maoshuang, Fuzhou, Fujian (CN)
(72) Inventor: Chen, Maoshuang, Fuzhou, Fujian (CN)
(74) Representative: Meyer, Thorsten

(57) **Abstract**

A pair of environment-friendly popcorn bridging shoes and a production process thereof are provided. The upper (1) of each bridging shoe comprises an inner bootie (11), which is composed of a lining (11A, 11) and an inner pad (11B) formed by single injection molding, and a vamp (12); the collar of the inner bootie (11) is fixedly connected with that of the vamp (12), and the lower edge of the vamp (12) wrapped by a PU bridging layer (3) extends to the bottom surface of the inner pad (11B) fixedly connected with the same; the upper (1) and a popcorn sole (2) made of mixed PU and TPU popcorn particles are integrally connected by the PU bridging layer (3). The shoe making process is simpler, and firmer bonding and better shock absorbing performance of the shoes are achieved; the vamp (12) and the sole (2) can well wrap the foot; and the dissolution proportion of shoes is increased by increasing the consumption of the PU material.

## Description

### Field of the Invention

The present invention relates to a pair of bridging shoes and a production process thereof, and particularly relates to a pair of environment-friendly, cushioning and well-wrapping popcorn bridging shoes and a production process thereof.

### Background of the Invention

Sports shoes in the current market are all provided with insoles, but the top surfaces of most insoles are planar at present, so that the insoles are difficult in fitting the feet, and the wearing comfort is unsatisfactory; although the upper surfaces of part of insoles are designed into concave structures with improved fitness with the feet, it is still difficult for the fitness of such insoles to be in an excellent state; moreover, the insoles are separated from uppers, so certain included angles are formed at the junctions of the edges of the insoles and the uppers, and these parts are difficult in fitting the feet; and due to the mobility of the insoles in the separated structures, it is difficult to keep each insole at one position for a long time, and then the insoles and the feet cannot stably and quickly reach a good fitting state. Thus, most of the shoes in the current market cannot wrap the feet ideally, so it is difficult to meet the requirement for comfort.

In addition, wrapping of most uppers at present on insteps is adjusted via the tightness of shoelaces. However, the shoes with shoelaces need to be provided with tongues, and the blocking effect of the tongues necessarily results in gaps which are difficult to eliminate between the uppers and the insteps and then influences the wrapping property of the uppers.

Moreover, the main bodies of current common insoles are all made of a foaming material, so that the insoles have certain cushioning performance, but the insoles are always thin, the shock absorbing performance of shoes mainly depends on thick soles, and the solubility of the foaming material and the rubber material for the insoles and the soles is not ideal, so the environment friendliness is not ideal.

### Summary of the Invention

The present invention provides a pair of environment-friendly, cushioning and well-wrapping popcorn bridging shoes for solving the problems that the uppers of most existing shoes cannot wrap the feet in an excellent state and the environment friendliness is not ideal.

The present invention adopts the following technical solution:

A pair of environment-friendly, cushioning and well-wrapping popcorn bridging shoes, each including an upper and a sole, wherein the upper is composed of an inner bootie and a vamp; the inner bootie is composed of a lining and an inner pad which is formed by single injection molding, and the lining and the inner pad are connected into a whole by injection molding; the collar of the inner bootie is fixedly connected with that of the vamp, and the lower edge of the vamp extends to the bottom surface of the inner pad and is fixedly connected with the inner pad; the upper is connected with the sole into a whole by a PU (Polyurethane) bridging layer, and the PU bridging layer wraps the lower edge of the vamp; and the sole is a popcorn sole made of mixed PU and TPU (Thermoplastic Polyurethane) popcorn particles.

### Further:

the TPU popcorn particles are spherical or ellipsoidal; and the diameter of the TPU popcorn particles is 20-350 microns.

The TPU popcorn particles protrude the outer surface of the sole.

The thickness of the inner pad is 10-20mm.

The lining is of a foot cover structure in a sock shape, or a lining structure of a common upper.

The lining is made of a waterproof and/or breathable fabric.

The inner pad is a PU inner pad made of a PU material, or a popcorn inner pad made of mixed PU and TPU popcorn particles.

A making process for the environment-friendly, cushioning and well-wrapping popcorn bridging shoes sequentially includes the following steps:
a. inner bootie: making a 1:1 mold kernel according to the foot shape, covering the mold kernel with a lining, and conveying the mold kernel to a specified station of an injection mold; then pouring a PU raw material or a PU and TPU particle mixture into the cavity of the mold; transferring the mold to a heating box, heating the mold to 60∼80°C, transferring the mold after 4∼8 minutes to a cooling box of -10∼0°C, and rapidly cooling the mold for 2∼5 minutes, thus obtaining the inner bootie after de-molding;
b. upper: stitching the collar of the inner bootie with that of a vamp using a stitching machine according to the collar radian, and then covering the inner bootie with the vamp to obtain the upper;
c. sole: placing a wear-proof sole sheet at a specified position in a sole mold cavity, placing TPU popcorn particles into a funnel of a PU injection molding machine, feeding the TPU popcorn particles into a head stirring cavity by means of rotation of a screw, stirring the TPU popcorn particles with a PU raw material uniformly at the speed of 8500 revolutions per second, uniformly injecting the mixture into the cavity of a sole mold, transferring the sole mold injected with the mixture of the TPU popcorn particles and the PU to the heating box, raising the temperature to 60∼80°C, foaming and curing the mixture for 4∼8 minutes, then transferring the sole mold to the rapid cooling box of -10~0°C for cooling, opening the mold to take out the sole, and trimming burrs; and
d. molding: placing the sole on a specified mold groove in a PU injection mold cavity; then charging the upper into a shoe last, hanging the last entering upper onto a mold base of an upper connecting injection molding machine using an air valve device, fixing the last entering upper by virtue of a pneumatic last clamping valve device, and then closing the mold; heating the mold to 60∼80°C, then injecting the PU raw material into the mold cavity, foaming and curing the PU raw material for 5∼8 minutes, opening the mold to take out a finished product, and trimming burrs.

The sole is produced using a 1:1 mold according to the inner shape of the mold groove; and the edge of the sole is tightly connected with the mold groove.

In step c, the weight ratio of the PU raw material to the TPU popcorn particles is 1: (3.5∼4).

It can be known from the above description on the structure of the present invention that compared with the prior art, the present invention has the following advantages:
1. The shoe making process of the present invention is simpler than the traditional shoe making process, can omit the procedures of sole laying and insole assembly, and can simplify the upper making procedure; the bonded popcorn sole and bridging layer are firmer and lighter than an EVA sole and have better shock absorbing performance.
2. The sole of the present invention itself does not destroy the TPU popcorn particles, the appearance of the product completely shows the popcorn particles, and the size of the popcorn particles used in the product is optional from 20∼350 microns according to the design requirement. The proportion between the TPU popcorn and the PU of the product can be adjusted according to the requirement of product performance. The high-elasticity TPU popcorn particle sole made by adopting the process of the present invention also has the following characteristics: the PU material and the TPU popcorn particles are hydrolytic, so the environment friendliness is greatly improved; high elasticity: the elasticity of the PU&TPU popcorn particles is over 65%; ultra-light weight: the weight depends on density ranging from 0.18 to 0.28g/cm³; good low-temperature performance: the sole made of PU&TPU popcorn particles keeps good flexibility at -25 °C.
3. The mold kernel is made according to the foot shape of human mechanics, and the inner bootie is made by an integrated molding process in the mold, so that the foot can be placed in a most comfortable and anastomotic space, and the forefoot to the heel is perfectly wrapped; and the vamp and the sole are completely attached to the last, so that the wearing comfort is very good and then a barefoot feeling is realized.
4. By changing the thickness, density, hardness and wrapping property of the inner pad according to different sports functions, the inner bootie achieves a maximum sports shock absorbing and assisting function and comfortably wraps the foot.
5. Manual sole laying is not needed, so that the processing efficiency is effectively improved, the problems of glue overflow, glue insufficiency and the like caused by manual sole laying are solved, and the vamp is very clean and good in tension force; and a glued layer does not exist between the upper and the sole, so that the elasticity of the sole is guaranteed.
6. The thickness 4∼6mm of the traditional insole is adjusted to the thickness 10∼20mm of the inner pad of the present invention by adjusting the radian of the keel of the PU mold, and the thicknesses of the EVA sole and the RB sole sheet are reduced, so that the elasticity and the comfort of the foot in the moving process are greatly strengthened; and by reducing the consumption of EVA and RB materials and increasing the consumption of the PU material, the dissolution proportion of a pair of shoes is increased, and the environment-friendly function is effectively promoted.

### Brief Description of the Drawings

Fig. 1 is a structural schematic diagram of an inner bootie of the present invention.
Fig. 2 is a schematic diagram of a section structure of the inner bootie of the present invention at the position A-A in Fig. 1.
Fig. 3 is a structural schematic diagram of a last entering upper of the present invention.
Fig. 4 is a structural schematic diagram of a bridging shoe of the present invention.
Fig. 5 is a schematic diagram of a section structure of the bridging shoe of the present invention at the position B-B in Fig. 4.
Fig. 6 is a schematic diagram of an overlooked structure of a popcorn sole.
Fig. 7 is a schematic diagram of a three-dimensional structure of the popcorn sole.

### Detailed Description of the Embodiments

Specific embodiments of the present invention will be described below with reference to the accompanying drawings.

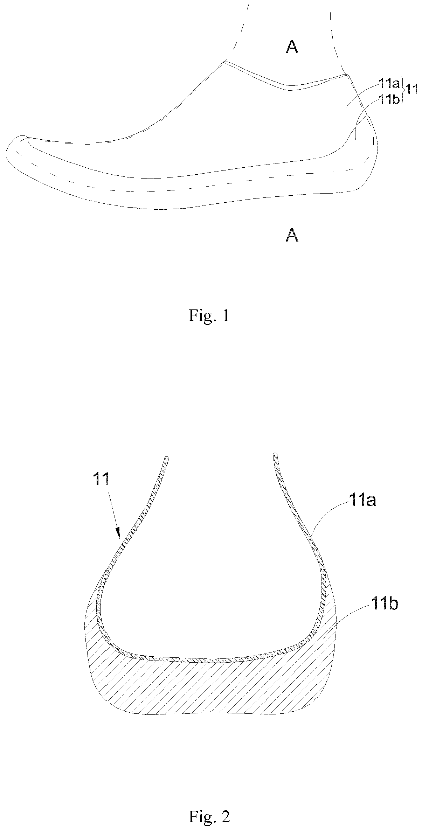

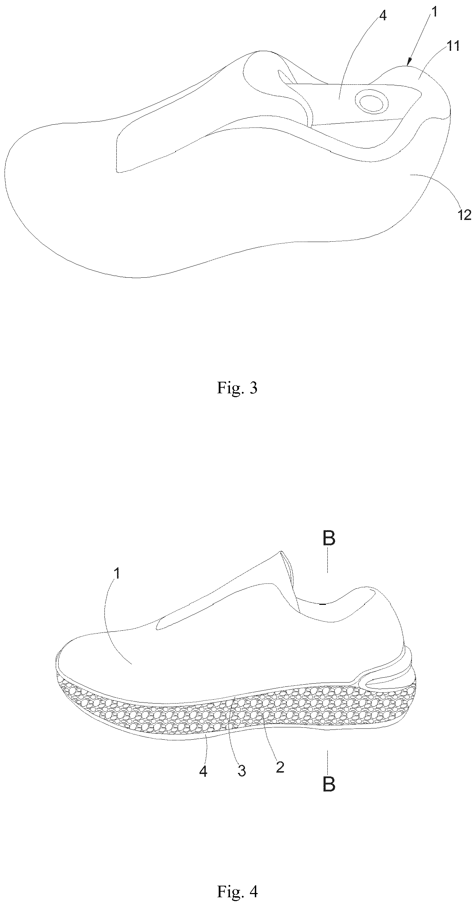

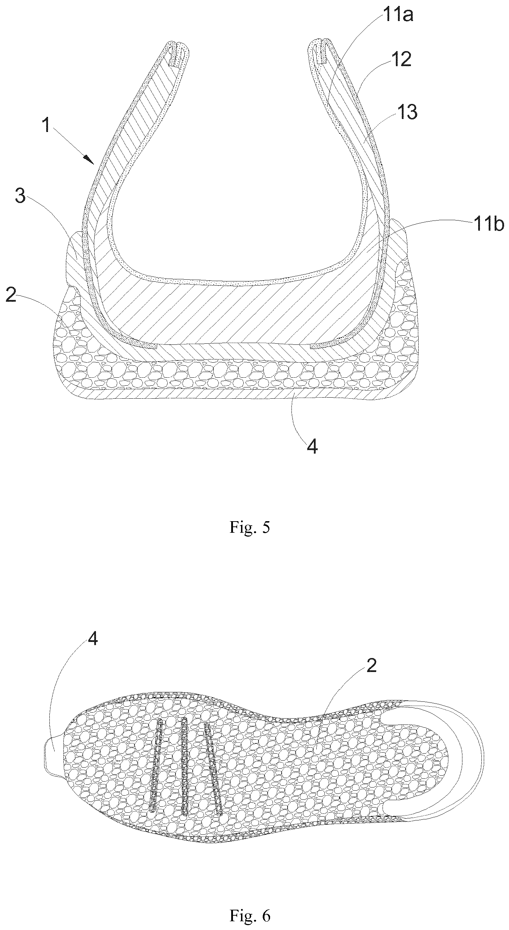

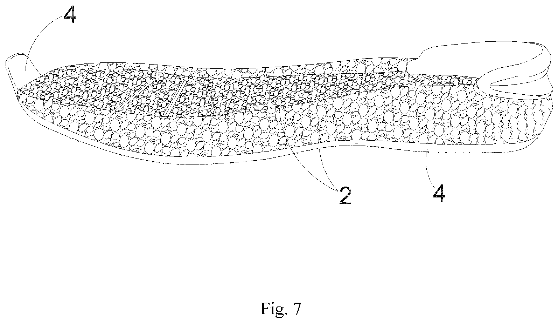

See Fig. 4, a pair of environment-friendly, cushioning and well-wrapping popcorn bridging shoes, each including an upper 1 and a sole 2, wherein the upper 1 is composed of an inner bootie 11 and a vamp 12. See Fig. 1 and Fig. 2, the inner bootie 11 is composed of a lining 11a and an inner pad 11b which is formed by single injection molding. The inner pad 11b is a PU inner pad 11b made of a PU material, or a popcorn inner pad 11b made of mixed PU and TPU popcorn particles, and the thickness of the inner pad 11b is 10-20mm. The lining 11a is of a foot cover structure in a sock shape, or of a structure that the collar and the bottom of the lining of a common upper 1 are open; and the lining 11a is made of a waterproof and/or breathable fabric. The lining 11a and the inner pad 11b are connected into a whole by injection molding. See Fig. 3 and Fig. 4, the collar of the inner bootie 11 is fixedly connected with that of the vamp 12, and the lower edge of the vamp 12 extends to the bottom surface of the inner pad 11b and is fixedly connected with the inner pad 11b. See Fig. 4, the upper 1 is connected with the sole 2 into a whole by a PU bridging layer 3, and the PU bridging layer 3 wraps the lower edge of the vamp 12. See Fig. 4 to Fig. 7, the sole 2 is a popcorn sole 2 made of mixed PU and TPU (Thermoplastic Polyurethane) popcorn particles by single injection molding, and the TPU popcorn particles are spherical or ellipsoidal; the diameter of the TPU popcorn particles is 20-350 microns; and the TPU popcorn particles protrude the outer surface of the sole 2.

In addition, a making process for the environment-friendly, cushioning and well-wrapping popcorn bridging shoes sequentially includes the following steps:
a. inner bootie 11: see Fig. 1 and Fig. 2, making a 1:1 mold kernel according to the foot shape, covering the mold kernel with a lining 11a, and conveying the mold kernel to a specified station of an injection mold, wherein the shapes of the mold kernel and the lining 11a can be adjusted according to different foot shapes; then pouring a PU raw material or a PU and TPU particle mixture into the cavity of the mold; transferring the mold to a heating box, heating the mold to 60∼80°C, transferring the mold after 4∼8 minutes to a cooling box of -10∼0°C, and rapidly cooling the mold for 2∼5 minutes, thus obtaining the inner bootie 11 after de-molding;
b. upper 1: see Fig. 3, stitching the collar of the inner bootie 11 with that of a vamp 12 using a stitching machine according to the collar radian, and then covering the inner bootie 11 with the vamp 12 to obtain the upper 1, wherein a filling material 13 for preventing cold, absorbing shock and the like can be filled between the vamp 12 and the lining 11a according to needs;
c. sole 2: placing a wear-proof rubber sole sheet 4 at a specified position in a sole mold cavity, placing TPU popcorn particles into a funnel of a PU injection molding machine, feeding the TPU popcorn particles into a head stirring cavity by means of rotation of a screw, stirring the TPU popcorn particles with a PU raw material uniformly at the speed of 8500 revolutions per second, uniformly injecting the mixture into the cavity of a sole mold, transferring the sole mold injected with the mixture of the TPU popcorn particles and the PU to the heating box, raising the temperature to 60∼80°C, foaming and curing the mixture for 4∼8 minutes, then transferring the sole mold to the rapid cooling box of -10∼0°C for cooling, opening the mold to take out the sole 2, and trimming burrs; and
d. molding: placing the sole 2 on a specified mold groove in a PU injection mold cavity, wherein the edge of the sole 2 is tightly connected with the mold groove; then charging the upper 1 into a shoe last 4, hanging the last entering upper 1 onto a mold base of an upper connecting injection molding machine using an air valve device, fixing the last entering upper 1 by virtue of a pneumatic last clamping valve device, and then closing the mold; heating the mold to 60∼80°C, then injecting the PU raw material into the mold cavity, foaming and curing the PU raw material for 5∼8 minutes, opening the mold to take out a finished product, and trimming burrs.

Compared with the traditional shoe making process, the shoe making process of the present invention is simpler, can omit the procedures of sole laying and insole assembly, and can simplify the making procedure of the upper 1. The bonded popcorn sole 2 and bridging layer 3 are firmer and lighter than an EVA sole and have better shock absorbing performance. The sole 2 of the present invention itself does not destroy the outer surface of the TPU popcorn particles, so that the appearance of the product sole 2 can completely show the spherical surfaces or ellipsoidal surfaces of the popcorn particles; and the size of the popcorn particles used in the product is optional from 20∼350 microns according to the design requirement. The proportion between the TPU popcorn and the PU of the product can be adjusted according to the requirement of product performance. The high-elasticity TPU popcorn particle sole made by adopting the process of the present invention also has the following characteristics: the PU material and the TPU popcorn particle material are hydrolytic, so the environment friendliness is greatly improved; high elasticity: the elasticity of the PU&TPU popcorn particles is over 65%; ultra-light weight: the weight depends on density ranging from 0.18 to 0.28g/cm³; good low-temperature performance: the sole made of PU&TPU popcorn particles keeps good flexibility at -25°C. See Fig. 1, the mold kernel is made according to the foot shape of human mechanics, and the inner bootie 11 is made by an integrated molding process in the mold, so that the foot can be placed in a most comfortable and anastomotic space, and the forefoot to the heel is perfectly wrapped; and the vamp and the sole 2 are completely attached to the last, so that the wearing comfort is very good, the worn shoes and the feet of a wearer are fused into a whole, and then a barefoot feeling is realized. By changing the thickness, density, hardness and wrapping property of the inner pad 11b according to different sports functions, the inner bootie 11 achieves a maximum sports shock absorbing and assisting function and comfortably wraps the foot. Manual sole laying is not needed, so that the processing efficiency is effectively improved, the problems of glue overflow, glue insufficiency and the like caused by manual sole laying are solved, and the vamp is very clean and good in tension force; and a glued layer does not exist between the upper 1 and the sole 2, so that the elasticity of the sole 2 is guaranteed. The thickness 4∼6mm of the traditional insole is adjusted to the thickness 10∼20mm of the inner pad 11b of the present invention by adjusting the radian of the keel of the PU mold, and the thicknesses of the EVA sole 2 and the RB sole sheet are reduced, so that the elasticity and the comfort of the foot in the moving process are greatly strengthened; and by reducing the consumption of EVA and RB materials and increasing the consumption of the PU material, the dissolution proportion of a pair of shoes is increased, and the environment-friendly function is effectively promoted.

Described above are merely specific embodiments of the present invention, but the design concept of the present invention is not limited thereto. All insubstantial modifications made to the present invention using the concept are behaviors infringing the protection scope of the present invention.

## Claims

1. A pair of environment-friendly, cushioning and well-wrapping popcorn bridging shoes, each comprising an upper and a sole, wherein the upper is composed of an inner bootie and a vamp; the inner bootie is composed of a lining and an inner pad which is formed by single injection molding, and the lining and the inner pad are connected into a whole by injection molding; the collar of the inner bootie is fixedly connected with that of the vamp, and the lower edge of the vamp extends to the bottom surface of the inner pad and is fixedly connected with the inner pad; the upper is connected with the sole into a whole by a PU bridging layer, and the PU bridging layer wraps the lower edge of the vamp; and the sole is a popcorn sole made of mixed PU and TPU popcorn particles.

2. The environment-friendly, cushioning and well-wrapping popcorn bridging shoes of claim 1, wherein the TPU popcorn particles are spherical or ellipsoidal; and the diameter of the TPU popcorn particles is 20-350 microns.

3. The environment-friendly, cushioning and well-wrapping popcorn bridging shoes of claim 1, wherein the TPU popcorn particles protrude the outer surface of the sole.

4. The environment-friendly, cushioning and well-wrapping popcorn bridging shoes of claim 1, wherein the thickness of the inner pad is 10-20mm.

5. The environment-friendly, cushioning and well-wrapping popcorn bridging shoes of claim 1, wherein the lining is of a foot cover structure in a sock shape, or a lining structure of a common upper.

6. The environment-friendly, cushioning and well-wrapping popcorn bridging shoes of claim 1, wherein the lining is made of a waterproof and/or breathable fabric.

7. The environment-friendly, cushioning and well-wrapping popcorn bridging shoes of claim 1, wherein the inner pad is a PU inner pad made of a PU material, or a popcorn inner pad made of mixed PU and TPU popcorn particles.

8. A making process for environment-friendly, cushioning and well-wrapping popcorn bridging shoes, wherein the making process is used for making the popcorn bridging shoes of any of claims 1 to 7; the making process sequentially comprises the following steps:
a. inner bootie: making a 1:1 mold kernel according to the foot shape, covering the mold kernel with a lining, and conveying the mold kernel to a specified station of an injection mold; then pouring a PU raw material or a PU and TPU particle mixture into the cavity of the mold; transferring the mold to a heating box, heating the mold to 60∼80°C, transferring the mold after 4∼8 minutes to a cooling box of -10~0°C, and rapidly cooling the mold for 2∼5 minutes, thus obtaining the inner bootie after de-molding;
b. upper: stitching the collar of the inner bootie with that of a vamp using a stitching machine according to the collar radian, and then covering the inner bootie with the vamp to obtain the upper;
c. sole: placing a wear-proof sole sheet at a specified position in a sole mold cavity, placing TPU popcorn particles into a funnel of a PU injection molding machine, feeding the TPU popcorn particles into a head stirring cavity by means of rotation of a screw, stirring the TPU popcorn particles with a PU raw material uniformly at the speed of 8500 revolutions per second, uniformly injecting the mixture into the cavity of a sole mold, transferring the sole mold injected with the mixture of the TPU popcorn particles and the PU to the heating box, raising the temperature to 60∼80°C, foaming and curing the mixture for 4∼8 minutes, then transferring the sole mold to the rapid cooling box of -10~0°C for cooling, opening the mold to take out the sole, and trimming burrs; and
d. molding: placing the sole on a specified mold groove in a PU injection mold cavity; then charging the upper into a shoe last, hanging the last entering upper onto a mold base of an upper connecting injection molding machine using an air valve device, fixing the last entering upper by virtue of a pneumatic last clamping valve device, and then closing the mold; heating the mold to 60∼80°C, then injecting the PU raw material into the mold cavity, foaming and curing the PU raw material for 5∼8 minutes, opening the mold to take out a finished product, and trimming burrs.

9. The making process for environment-friendly, cushioning and well-wrapping popcorn bridging shoes of claim 7, wherein the sole is produced using a 1:1 mold according to the inner shape of the mold groove; and the edge of the sole is tightly connected with the mold groove.

10. The making process for environment-friendly, cushioning and well-wrapping popcorn bridging shoes of claim 7, wherein in step c, the weight ratio of the PU raw material to the TPU popcorn particles is 1: (3.5∼4).
